# EUROPÄISCHE PATENTSCHRIFT

(11) **EP 2 545 061 B1**
(45) Veröffentlichungstag und Bekanntmachung des Hinweises auf die Patenterteilung: **09.07.2014**
(21) Anmeldenummer: 11704622.7
(22) Anmeldetag: 23.02.2011
(51) Int. Cl.: C07F 9/09, C10M 125/20, C10M 125/24, C07F 9/165

(54) **SALZE VON THIOPHOSPHORSÄUREN UND DEREN VERWENDUNG IN SCHMIERSTOFFEN**
SALTS OF THIOPHOSPHORIC ACIDS AND THEIR USE IN LUBRICANTS
SELS D'ACIDES THIOPHOSPHORIQUES ET LEUR UTILISATION DANS DES LUBRIFIANTS

(30) Priorität: 08.03.2010 EP 10155811
(43) Veröffentlichungstag der Anmeldung: 16.01.2013
(73) Patentinhaber: BASF SE, 67056 Ludwigshafen (DE); ILCO Chemikalien GmbH, 41812 Erkelenz (DE)
(72) Erfinder: SZARVAS, Laszlo, 67071 Ludwigshafen (DE); GERHARD, Dirk, 68163 Mannheim (DE); VOLKHOLZ, Matthias, 41812 Erkelenz (DE); VOLKHOLZ, Corvin, 41812 Erkelenz (DE)
(86) Internationale Anmeldenummer: PCT/EP2011/052644
(87) Internationale Veröffentlichungsnummer: WO 2011/110423

(56) Entgegenhaltungen:
- WO-A1-2006/063655
- WO-A1-2008/155333
- WO-A1-2010/096168
- DD-A1- 153 844
- DE-A1- 2 221 646
- US-A- 3 324 110
- US-A- 4 108 858

## Beschreibung

Die Erfindung betrifft Salze aus dem Anion der Di-, Tri- oder Tetrathiophosphorsäure gemäß Formel I 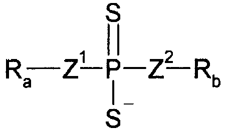 worin Z¹ und Z² unabhängig voneinander für ein Sauerstoff- oder ein Schwefelatom stehen und Rₐ und R_{b} unabhängig voneinander für eine organische Gruppe mit 1 bis 20 C-Atomen stehen,
und einem Kation, ausgewählt aus
einem Imidazoliumkation der Formel II 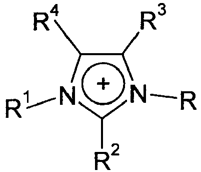 worin R und R¹ unabhängig voneinander für eine C1- bis C12-Alkylgruppe und R² bis R⁴ unabhängig voneinander für ein Wasserstoffatom oder eine C1- bis C12-Alkylgruppe stehen,
einem Pyridiniumkation der Formel III 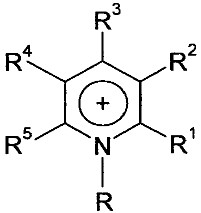 worin R für eine C1- bis C12-Alkylgruppe und R¹ bis R⁵ unabhängig voneinander für ein Wasserstoffatom oder eine C1- bis C12-Alkylgruppe stehen
einem Pyrazoliumkation der Formel IV 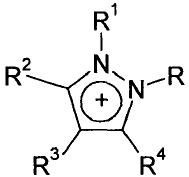 worin R und R¹ unabhängig voneinander für eine C1- bis C12-Alkylgruppe und R² bis R⁴ unabhängig voneinander für ein Wasserstoffatom oder eine C1- bis C12-Alkylgruppe stehen,
einem Imidazoliniumkation der Formel V 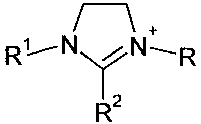 worin einer der Reste R oder R¹ für ein Wasserstoffatom und der andere Rest R oder R¹ für eine C1- bis C8 Alkylgruppe oder C1- bis C8 Hydroxyalkylgruppe und R² für eine C1- bis C20 Alkylgruppe oder eine C2 bis C20 Alkylengruppe stehen
oder einem Triazoliumkation der Formel VI 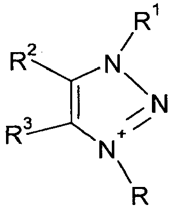 worin R und R¹ für ein Wasserstoffatom oder eine C1- bis C12-Alkylgruppe stehen und die Reste R² und R³ unabhängig voneinander für ein Wasserstoffatom oder eine Alkyl-gruppe mit 1 bis 12 C-Atomen stehen oder R² und R³ gemeinsam einen Benzolring ausbilden, dessen Kohlenstoffatome gegebenenfalls durch C1- bis C4 Alkylgruppen substituiert sein können,

Beim Einsatz von Schmierstoffen oder Hydraulik-Flüssigkeiten kommt es im Laufe der Zeit zu Schädigungen an den Apparateteilen. Die Schädigungen sind insbesondere auf Korrosion und Abrieb an Metallteilen oder Verschleiß der Metallteile zurückzuführen.

Der Zusatz von geeigneten Additiven zu Schmierstoffen, insbesondere Schmierölen, oder Hydraulik-Flüssigkeiten soll einer derartigen Schädigung möglichst langfristig entgegenwirken.

Bekannt ist die Verwendung von Metallsalzen der Dithiophosphorsäure, insbesondere von Zink-dithiophosphaten als derartiges Additiv. Nachteilig ist jedoch, dass bei der Verwendung von derartigen Metallsalzen z.B. in Verbrennungsmotoren, Metallsalze, insbesondere Metalloxide wie Zinkoxid als Rückstände entstehen. Derartige Metalloxide bilden Ablagerungen auf Apparateteilen oder belasten als Feinstaub die Umwelt.

Gewünscht sind daher Additive, welche möglichst rückstandsfrei verbrennen, was auch als asche-frei bezeichnet wird.

Salze der Dithiophosphorsäure mit organischen Kationen sind aus DE-A 2131926 und DE-A 2221646 bekannt. Durch Ersatz der Metallsalze gegen derartige organische Kationen soll Asche-freiheit erreicht werden.

In DE-A 2131926 werden Salze aus einem Phosphonium-Kation und einem Thiophosphorsäurederivat als Additive zu Hydraulik-Flüssigkeit beschrieben. Die beschriebenen Salze vermindern Schäden an Metallteilen des hydraulischen Systems. Derartige Schäden werden auf eine Verschleißwirkung der Hydraulik-Flüssigkeit zurückgeführt.

DE-A 2221646 offenbart Schmieröle, welche Aminsalze einer Thiophosphorsäure enthalten. Die Aminsalze vermindern den Abrieb an Anlagenteilen. Beim Aminkation handelt es sich um ein quaternäres Ammonium-Kation.

US 4 108 858 beschreibt hochmolekulare Kationen, z.B. Pyridiniumkation, welche als Detergentien in Brennstoffen oder als Dispergiermittel in Schmierölen verwendet werden.

WO 2010/096168 beschreibt den Zusatz von ionischen Flüssigkeiten zu Schmierölen.

Für die Verwendung in Schmierölen werden ständig verbesserte Additive gesucht, welche möglichst alle obigen Anforderungen noch besser erfüllen.

Aufgabe der vorliegenden Erfindung waren daher Additive, z.B. zu Schmierstoffen oder Hydraulikflüssigkeiten, welche leicht herstellbar oder zugänglich sind, mit verschiedenen Schmierölen eine gute Verträglichkeit haben und daher in unterschiedlichsten Schmierstoffen oder Hydraulikflüssigkeiten eingesetzt werden können, eine möglichst gute Wirkung haben und Korrosion und Abrieb an Metallteilen deutlich vermindern, sowie keine Rückstände bilden, d.h. aschefrei sind.

Demgemäß wurden die Salze gemäß Formel I und ihre Verwendung in Schmierölen gefunden.

Bei den Salzen handelt es sich um Salze aus dem Anion der Di-, Tri- oder Tetrathiophosphorsäure gemäß Formel I 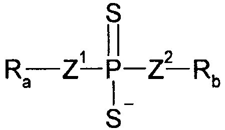 worin Z¹ und Z² unabhängig voneinander für ein Sauerstoff- oder ein Schwefelatom stehen und Rₐ und R_{b} unabhängig voneinander für eine organische Gruppe mit 1 bis 20 C-Atomen stehen,
und einem Kation, welches ein heterocyclisches Ringsystem mit ein bis drei Stickstoffatomen enthält.

### Zum Anion

Vorzugsweise stehen sowohl Z¹ als auch Z² in Formel I für ein Sauerstoffatom. Es handelt sich daher vorzugsweise um das Anion einer Dithiophosphorsäure.

Rₐ und R_{b} in Formel I stehen vorzugsweise für eine organische Gruppe mit 1 bis 16 C-Atomen, ganz besonders bevorzugt 6 bis 16 C-Atomen, wobei die organische Gruppe auch Heteroatome, z.B. Sauerstoff oder Stickstoff, vorzugsweise in Form einer Hydroxylgrupe, Ethergruppe, primären, sekundären oder tertiären Aminogruppe enthalten kann.

Insbesondere stehen Rₐ und R_{b} in Formel I für eine organische Gruppe, welche ausschließlich aus Kohlenstoff und Wasserstoff besteht und keine sonstigen Heteroatome enthält, das heißt für eine Kohlenwasserstoffgruppe. Dabei kann es sich um eine aliphatische oder eine aromatische Kohlenwasserstoffgruppe handeln, es kann sich auch um eine Kohlenwasserstoffgruppe handeln, welche sowohl aus aliphatischen als auch aromatischen Gruppen besteht.

Besonders bevorzugt handelt es sich bei Rₐ und R_{b} unabhängig voneinander um eine C1 bis C20-Alkylgruppe, insbesondere eine C1 bis C16, ganz besonders bevorzugt eine C6 bis C 16 Alkylgruppe und in einer besonderen Ausführungsform für eine C8 bis C12 Alkylgruppe.

Die dem Anion zugrunde liegende Dithiophosphorsäure ist in bekannter Weise durch Umsetzung von Phosphorsulfiden wie P₄S₁₀ oder P₂S₅ mit den entsprechenden Alkoholen der Reste Rₐ und R_{b} erhältlich. Bei dieser Umsetzung kann ein einziger Alkohol oder natürlich auch ein Gemisch von Alkoholen verwendet werden. Bei Verwendung eines einzigen Alkohols sind Rₐ und R_{b} identisch. Dagegen werden bei Verwendung eines Alkohol-Gemisches, abhängig von der Zusammensetzung des Alkoholgemisches, Gemische von Verbindungen mit entsprechender statistischer Verteilung von identischen und verschiedenen Resten Rₐ und R_{b} erhalten.

Unabhängig davon, ob Rₐ und R_{b} in dem Anion der Formel I, bedingt durch die Herstellung der Dithiophosphorsäure, identisch oder verschieden sind, gilt, dass die Summe der Kohlenstoffatome in Rest Rₐ und R_{b} in einer bevorzugten Ausführungsform 12 bis 40, besonders bevorzugt 14 bis 30 und ganz besonders bevorzugt 16 bis 24 beträgt.

Insbesondere sind Rₐ und R_{b} durch die Verwendung eines einzigen Alkohols bei der Herstellung der Dithiophosphorsäure identisch.

Als besonders geeignete Anionen der Formel I seien Anionen genannt, in denen mindestens einer der Reste Rₐ und R_{b} für eine 2-Ethylhexylgruppe oder eine 2-Propylheptylgruppe steht; ganz besonders geeignet sind die Anionen, in denen beide Reste Rₐ und R_{b} für eine 2-Ethylhexylgruppe oder beide Reste Rₐ und R_{b} für eine 2-Propylheptylgruppe stehen (siehe auch Formeln in den Beispielen).

### Zum Kation

In den Imidazoliumkationen der Formel II stehen R und R1 unabhängig voneinander bevorzugt für eine C1 bis C4 Alkylgruppe.

Die Reste R2 bis R4 in Formel II stehen bevorzugt für ein Wasserstoffatom oder eine C1 bis C4 Alkylgruppe. Ganz besonders bevorzugt stehen die Reste R2 bis R4 in Formel II für ein Wasserstoffatom.

In den Pyridiniumkationen der Formel III steht R bevorzugt für eine C1 bis C4 Alkylgruppe.

Die Reste R1 bis R5 in Formel III stehen bevorzugt für ein Wasserstoffatom oder eine C1 bis C4 Alkylgruppe. Ganz besonders bevorzugt stehen die Reste R1 bis R5 in Formel III für ein Wasserstoffatom.

In den Pyrazoliumkationen der Formel IV stehen R und R1 bevorzugt für eine C1 bis C4 Alkylgruppe.

Die Reste R2 bis R4 in Formel IV stehen bevorzugt für ein Wasserstoffatom oder eine C1 bis C4 Alkylgruppe. Ganz besonders bevorzugt stehen die Reste R2 bis R4 in Formel IV für ein Wasserstoffatom.

Imidazoliniumkationen der Formel V sind solche, in denen einer der Reste R oder R1 für ein Wasserstoffatom steht und der andere Rest R oder R1 für eine C1 bis C8 Alkylgruppe oder eine C1 bis C8 Hydroxyalkylgruppe steht. R2 ist eine C1 bis C20 Alkylgruppe oder eine C2 bis C20 Alkylengruppe.

Als Beispiel für ein derartiges Imidazoliniumkation sei das Kation des

Amine-O (Handelsname BASF) der Formel

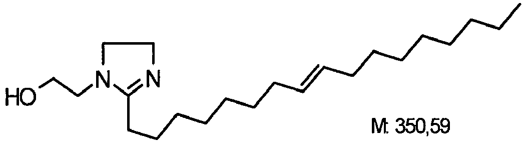

Das Kation bzw. Salz ist daraus durch Zugabe der entsprechenden Säure und damit verbundener Anlagerung eines Wasserstoffatoms als Rest R an das unsubstituierte N-Atom erhältlich.

Die Reste R und R1 in Formel VI stehen bevorzugt für ein Wasserstoffatom oder eine C1 bis C4 Alkylgruppe.

Ein bevorzugtes Triazoliumkation ist z.B. das Kation des Benzotriazols, welches wiederum durch Umsetzung mit der gwünschten Säure und Anlagerung eines Wasserstoffatoms als Rest R an das entsprechende Stickstoffatom, wie in Formel VI dargestellt ist.

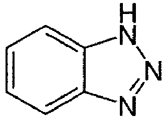

Ganz besonders bevorzugt handelt es sich bei dem Kation um ein Imidazoliumkation der obigen Formel II.

Als besonders bevorzugte Imidazolium - Kationen genannt, seien z.B.:
1-Methyl-3-methylimdazolium (R und R1=Methyl, R2, R3,R4 = H), kurz MMIM
1-Ethyl-3-methylimdazolium (R= Ethyl und R1=Methyl, R2, R3,R4 = H), kurz EMIM
1-Ethyl-3-ethylimdazolium (R und R1= Ethyl, R2, R3,R4 = H), kurz EEIM
1-Butyl-3-methylimdazolium (R= Butyl und R1=Methyl, R2, R3,R4 = H), kurz BMIM
1-Butyl-3-ethylimdazolium (R= Butyl und R1=Ethyl, R2, R3,R4 = H), kurz BEIM
1-Butyl-3-butylimdazolium (R und R1 = Butyl, R2, R3,R4 = H), kurz BBIM
1-Octyl-3-methylimidazolium (R=Octyl und R1 = Methyl, R2, R3,R4 = H), kurz OMIM

### Herstellung der Salze

Die Salze können nach verschiedenen bekannten Methoden hergestellt werden.

Insbesondere können die Salze aus anderen Salzen des Kations hergestellt werden, z.B. aus den Alkylcarbonatsalzen oder Hydroxydsalzen.

Salze aus den oben genannten Kationen und einem Alkylcarbonat als Anion und die Herstellung derartiger Salze sind z.B. aus WO 2005/021484 bekannt. In dieser WO ist auch die Überführung der Alkylcarbonatsalze in Salze anderer Anionen durch Zugabe einer Säure beschrieben.

Entsprechend der Lehre der WO können Imidazolium-alkylcarbonate oder die Alkylcarbonate anderer Kationen (nach folgend zusammenfassend auch kurz Alkylcarbonat genannt) durch Zugabe der Di-, Tri- oder Tetrathiophosphorsäure in Salze der Formel I überführt werden. Bei der Umsetzung entsteht Kohlendioxid.

Bevorzugte Ausgangsverbindung ist das Imidazolium-methylcarbonat als Ausgangsstoff.

Als Di-, Tri- oder Tetrathiophosphorsäure wird die entsprechende Säure mit den gewünschten Resten Rₐ und R_{b} gewählt. Di-, Tri- oder Tetrathiophosphorsäure gemäß Formel VII 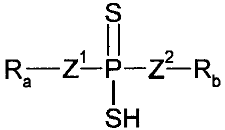 worin Z¹ und Z² unabhängig voneinander für ein Sauerstoff- oder ein Schwefelatom stehen, der Reste Rₐ für eine 2-Propylheptylgruppe und der R_{b} für eine organische Gruppe mit 1 bis 20 C-Atomen steht, sind bisher nicht beschrieben und gehören im Rahmen dieser Erfindung zu den bevorzugten Phosphorsäuren, insbesondere als DiThiophosphorsäure (Z¹ und Z² stehen für Sauerstoff) zur Herstellung der obigen Salze. Besonders bevorzugt stehen beide Reste Rₐ und R_{b} in Formel VII für eine 2-Propyl-heptylgruppe. Bevorzugte Salze im Rahmen dieser Erfindung sind Salze der obigen Kationen der Formel II bis VI, bevorzugt des Imidazoliumkations der Formel II, mit einem Anion der Formel VII.

Die Umsetzung des Alkylcarbonats mit der Di-, Tri- oder Tetrathiophosphorsäure kann z.B. bei 0 bis 100°C, insbesondere 10 bis 80°C und Normaldruck, gegebenenfalls in Gegenwart eines Lösemittels erfolgen.

Geeignete Lösemittel sind insbesondere Alkohole wie Methanol, Ethanol, Isopropanol. Besonders bevorzugt ist Methanol als Lösemittel.

Das Alkylcarbonat und die Di-, Tri- oder Tetrathiophosphorsäure können jeweils im Überschuss eingesetzt werden. Bevorzugt ist ein Molverhältnis von 1 zu 0,8 bis 0,8 zu 1.

Ganz besonders bevorzugt werden das Alkylcarbonat und die Di-, Tri- oder Tetrathiophosphorsäure in ca. stöchiometrischem Verhältnis eingesetzt.

Alternativ können die Verbindungen der Formel I auch das dem Hydroxid-salz der oben genannten Kationen hergestellt werden. Hier erfolgt die Umsetzung mit der Di-, Tri- oder Tetrathiophosphorsäure unter Abspaltung von Wasser.

Weiterhin sind zur Herstellung der Salze beliebige Metathese-reaktionen, d.h. Anionenautausch-reaktionen, möglich, ausgehend von einem beliebigen Salz eines oben genannten Kations und Austausch des Anions gegen das entsprechende Anion der Di-, Tri- oder Tetrathiophosphorsäure. Als Ausgangs-Salz für den Anionenaustausch sind Halogenide und insbesondere Chloride in Anbetracht der späteren Verwendung und eines möglichen Restgehaltes an Chlorid im Allgemeinen unerwünscht.

Die Salze enthalten vorzugsweise weiniger als 100 ppm, insbesondere weniger als 20 ppm Halogenide. Besonders bevorzugt sind sie frei von Halogeniden.

Bevorzugte Salze sind z.B.
MMIM-bis-2-ethylhexyldithiophosphat = MMIM [(2EH)₂DTP]
   MMIM-bis-2-propylheptyldithiophosphat = MMIM [(2PH)₂DTP]
EMIM-bis-2-ethylhexyldithiophosphat = EMIM [(2EH)₂DTP]
   EMIM-bis-2-propylheptylldithiophosphat = EMIM [(2PH)₂DTP]
EEIM-bis-2-ethylhexyldithiophosphat = EEIM [(2EH)₂DTP]
   EEIM-bis-2-propylheptyldithiophosphat = EEIM [(2PH)₂DTP]
BMIM-bis-2-ethylhexyldithiophosphat = BMIM [(2EH)₂DTP]
   BMIM-bis-2-propylheptyldithiophosphat = BMIM [(2PH)₂DTP]
BEIM-bis-2-ethylhexyldithiophosphat = BEIM [(2EH)₂DTP]
   BEIM-bis-2-propylheptyldithiophosphat = BEIM [(2PH)₂DTP]
BBIM-bis-2-ethylhexyldithiophosphat = BBIM [(2EH)₂DTP]
   BBIM-bis-2-propylheptyldithiophosphat = BBIM [(2PH)₂DTP]
OMIM-bis-2-ethylhexyldithiophosphat = OMIM [(2EH)₂DTP]
   OMIM-bis-2-propylheptyldithiophosphat = OMIM [(2PH)₂DTP]

Sowie Mischungen der Formel [Kation] [(2EH)ₓ(2PH)_{y}DTP] mit x + y = 2.
Daneben können auch andere Mischungen eingesetzt werden.

Das Salz der Formel I ist vorzugsweise eine ionische Flüssigkeit, d.h. das Salz hat einen Schmelzpunkt kleiner 100°C, oft sogar kleiner 20°C. Nach Abtrennung des Lösemittels können die Salze daher als Flüssigkeiten transportiert, gelagert und in einfacher Weise verwendet werden.

### Verwendung

Die Salze oder Zusammensetzungen, welche ein Salz enthalten, eignen sich als Schmierstoff. Als Schmierstoff wird in diesem Zusammenhang jeder Stoff verstanden, der verwendet wird, um Reibungseinflüsse zwischen sich relativ zueinander bewegenden Oberflächen zu vermeiden oder zu vermindern.

Insbesondere eignen sich die Salze als Zusatzstoffe zu üblichen Schmierstoffen, seien es bei Normalbedingungen (20°C, 1 bar) flüssige Schmierstoffe (Schmieröle), feste Schmierstoffe, Pasten oder Fette.

Feste Schmierstoffe sind z.B. Gleitlacke, Graphit, Metallsulfide wie Molybdänsulfid oder Metalloxide (TiO₂, ZnO u.a,)

Übliche Schmieröle sind Zusammensetzungen, welche als Hauptbestandteil ein Öl oder Gemisch von Ölen und gegebenenfalls noch weitere Zusatzstoffe enthalten oder ausschließlich aus einem Öl oder Gemisch von Ölen bestehen.

In einer besonderen Ausführungsform handelt es sich bei den Schmierstoffen um Schmieröle, welche zu mehr als 50 Gew.-% aus mindestens einem tierischen Öl, pflanzlichen Öle, Mineralöle oder synthetischen Öl oder deren Gemische bestehen.

Geeignete Öle sind tierische oder pflanzliche Öle oder Mineralöle; es kann sich auch um synthetische Öle handeln, die aus verschiedensten Ausgangsverbindungen, insbesondere auch aus den vorstehenden tierischen, pflanzlichen Ölen oder Mineralölen hergestellt werden können.

Bei den Öle, z.B. Mineralölen, kann es sich um azyklische und/oder zyklische gesättigte und/oder ungesättigte Kohlenwasserstoffe handeln, die gegebenenfalls ein oder mehrere Heteroatome wie z.B. O, F, P, N, S enthalten können.

Als Öle ohne Heteroatome seien beispielsweise Alkylbenzole, Cycloalkane, Polyalphaolefine und Copolymere aus ungesättigten Kohlenwasserstoffen genannt; als Öle, welche Sauerstoff als Heteroatom enthalten, seien Alkohole, Ester, Ketone, Furane, Polyether und Copolymere aus Olefinen und z.B. Acrylaten, Maleinaten oder Fumaraten genannt; als Öle, welche Fluor und Sauerstoff als Heteroatome enthalten Perfluorether oder-ester genannt; als Öle, welche Phosphor und Sauerstoff als Heteroatome enthalten, seien Phosphorsäureester genannt; als Öle, welche Phosphor und Stickstoff als Heteroatome enthalten, seien Phosphazene genannt als Öle, welche Schwefel oder Stickstoff als Heteroatome enthalten, seien Thiophene genannt.

Die genannten Verbindungen sind vorzugsweise im Temperaturbereich der Anwendung, welche im Bereich von -80°C bis +450°C liegen kann, flüssig (1013mbar), müssen dies aber bei bestimmten Anforderungen nicht sein (z.B. Gleitlacke). Die Schmieröle enthalten die Öle z.B. in einer Menge von 1 bis 99,9 Gew.-%. Die Zusammensetzungen, bzw. Schmieröle können je nach Bedarf Additive enthalten, die z.B. folgende Aufgaben erfüllen: Alterungsschutz, Verschleißschutz, Extreme Pressure Additive, Korrosionsschutz, Detergents, Dispersants, Demulgierung, Emulgierung, Antischaummittel sowie weitere in der Literatur beschriebene Aufgaben, (s.a. in "Lubricant additives: chemistry and applications/editor, Leslie R. Rudnick, --2nd edition, 2009, CRC Press".)

Tierische oder pflanzliche Öle sind z.B. Rapsöl, Rizinusöl oder Fischöl.

Als Mineralöle kommen z.B. Erdölfraktionen von Spindelölen bis zu Schmierölen SAE 30, 40 oder 50 in Betracht.

Synthetische Öle sind insbesondere Öle, die durch Veresterung oder Veretherung geeigneter Ausgangsstoffe, z.B. auch der vorstehenden tierischen oder pflanzlichen Öle oder Mineralöle erhältlich sind. Genannt seien z.B. Diester, wie sie durch Veresterung von Dicarbonsäuren wie Adipinsäure oder Sebacinsäure mit einwertigen Alkoholen erhält oder Oligoester, welche durch Veresterung von Gemischen aus Di- oder Oligocarbonsäuren, Di- oder Oligoalkoholen und Monoalkoholen erhältlich sind, z.B. Oligoester aus Sebacinsäüre oder Adipinsäure, einem Polyglykol und einem einwertigen Alkohol wie 2-Ethylhexanol.

Synthetische Öle sind z.B. auch bei Normalbedingungen (20°C, 1 bar) flüssige Oligomere, welche durch Polymerisation, sei es eine radikalische Polymerisation, Polykondensation oder sonstige Polyadduktbildung, von Monomeren erhältlich sind. In Betracht kommen z. B. Oligomere auf Basis von Ethylenoxid, Propylenoxid, Alkenen oder iso-Alkenen, wie Polyethylenglykole, Polypropylenglykole, Polyisobutylene oder durch radikalische Polymerisation von ethylenisch ungesättigten Monomeren erhältliche Polymere und Copolymere, z.B. auf Basis von Vinylethern, Vinylestern, Acrylestern, meteaten, Fumaraten etc..

Die Schmierstoffe, bzw. Schmieröle, finden z.B. Verwendung als Motorenöle (Otto- und Dieselmotoren, Getriebeöle, Kettenschmiermittel oder Schmierfette. Die Aufzählung soll nur exemplarisch übliche Verwendungen von Schmierstoffen aufzeigen.

Weiterhin eignen sich die Salze oder Zusammensetzungen, welche ein Salz enthalten, als oder in Hydraulik-Flüssigkeiten, Dämpfungsflüssigkeiten oder Kraftübertragungsmitteln.

Die Salze eignen sich als Zusatzstoff für Zusammensetzungen, welche in Anwendungen zum Einsatz kommen, bei denen Korrosion und Abrieb an Apparateteilen auftritt oder zu befürchten ist.

Es können auch Mischungen der Salze als Zusatzstoffe verwendet werden.

Vorzugsweise enthalten die Zusammensetzungen, welche z.B. als Schmierstoffe, bzw. Schmieröle, Hydraulik-Flüssigkeiten, Dämpfungsflüssigkeiten oder Kraftübertragungsmitteln verwendet werden, mindestens 0,1 Gew.-%, besonders bevorzugt mindestens 0,2 Gew.-% der Salze, sei es nur ein Salz oder eine Mischung mehrerer Salze. Im Allgemeinen ist ein maximaler Gehalt von 20 Gew.-%, insbesondere von 10 Gew.-% oder insbesondere 5 Gew.-% oder besonders bevorzugt von 3 Gew.-% ausreichend.

Angemerkt sei, dass bei allen vorstehenden Verwendungen auch wässrige Systeme in betracht kommen, insbesondere zweiphasige Systeme aus einer wässrigen und einer nicht wässrigen Phase, bei denen sich das Salz der Di-, Tri- oder Tetrathiophosphorsäure vorzugsweise in der nicht-wässrigen Phase befindet.

Schmierstoffe können insbesondere einen Gehalt von 0,1 bis 20 Gew.-%, besonders bevorzugt von 0,2 bis 10 Gew. , ganz besonders bevorzugt von 0,3 bis 5 Gew.-% der Salze haben.

Bevorzugte Salze sind ionische Flüssigkeiten (siehe oben); aus diesem Grund können sie auch ohne weiteres selbst als Schmieröl, Hydraulikmittel, Dämpfungsflüssigkeit oder sonstiges Kraftübertragungsmittel verendet werden.

Die Salze können auch mit anderen ionischen Flüssigkeiten gemischt oder darin gelöst werden. Als andere ionische Flüssigkeiten seien Salze der obigen Kationen, z.B. der Pyridinium-Kationen, Pyrazolium-Kationen oder insbesondere der Imidazoliumkationen gemäß Formeln II, III und IV mit beliebigen Anionen genannt. Exemplarisch seien als derartige Anionen Chlorid, Bromid, Hydrogensulfat, Tetrachloroaluminat, Thiocyanat, Dicyanaamid, Methylsulfat, Ethylsulfat, Methansulfonat, Formiat, Acetat, Dimethylphosphat, Diethylphosphat, p-Tolylsulfonat, Tetrafluoroborat und Hexafluorophosphat, Methylmethylphosphonat und Methylphosphonat genannt.

Diese Erfindung betrifft daher auch Zusammensetzungen, die zu mindestens 20 Gew.-%, insbesondere zu mindestens 50 Gew.-% und besonders bevorzugt zu mindestens 70 Gew.-% aus ionischen Flüssigkeiten bestehen und Salze, vorzugsweise in einer Menge von mindestens 0,1 Gew.-%, insbesondere mindestens 0,5 Gew.-%, ganz besonders bevorzugt in einer Menge von mindestens 1 Gew.-%, bezogen auf die Zusammensetzung, enthalten.

Das Salz kann in der ionischen Flüssigkeit gelöst sein, der bevorzugte maximale Gehalt entspricht dann dem oben genannten von 20 Gew.-%.

Insbesondere ist in diesen Zusammensetzungen das Salz selbst eine ionische Flüssigkeit. In diesem Fall kann ihr Gehalt in der Mischung mit anderen ionischen Flüssigkeiten beliebig hoch sein und bis zu 100 Gew.-% betragen; derartige Zusammensetzungen können z.B. auch zu 0,1 bis 90 Gew.-%, insbesondere 0,5 bis 50 Gew.-%, aus den Salzen, 10 bis 99,9 Gew.-%, insbesondere 50 bis 99,5 Gew.-% sonstigen ionischen Flüssigkeiten und gegebenenfalls 0 bis 70 Gew.-%, insbesondere 0 bis 50 Gew.-% weiteren Zusatzstoffen oder Lösemitteln bestehen, wobei der Gehalt an ionischen Flüssigkeiten in der Zusammensetzung insgesamt vorzugsweise mindestens 20 Gew.-%, besonders bevorzugt mindestens 50 Gew.-% beträgt.

Auch die vorstehenden Zusammensetzungen, die zu mindestens 20 Gew.-% aus ionischen Flüssigkeiten bestehen, eigenen sich entsprechend mit den gleichen, oben bereits aufgeführten Vorteilen als Schmieröl, Hydraulik-Flüssigkeit, Dämpfungsflüssigkeit oder sonstiges Kraftübertragungsmittel.

Zusammenfassend ist festzustellen, dass bei der Anwendung der Salze aus dem Anion der Di-, Tri- oder Tetrathiophosphorsäure bei den vorstehenden Verwendungen, z.B. in Schmierölen, folgende Vorteile gegeben sind:
- ein besserer Schutz gegen Verschleiß an Anlagenteilen (Verschleißschutzverhalten)
- ein hoher Oxidationsschutz der Öle
- eine Unterstützung der Wirkung anderer Additive, z.B. Phosphorsäureester (synergistische Wirkung)
- ein geringerer Gehalt an Schwefel und Phosphor in der Formulierung
- Aschefreiheit, d.h. es kommt nicht zu einer Feinstaubemission von Metalloxiden wie bei der Verwendung von Metallsalzen in Verbrennungsmaschinen aller Art zu beobachten ist, beispielhaft seien Otto und Dieselmotoren genannt. Daraus resultiert eine bessere Umweltverträglichkeit und
- eine Verbesserung des Reibungsverhaltens im Vergleich zu herkömmlichen Verschleißschutzadditiven, was z.B. auch zu längerer Lebensdauer und zur Energieeinsparung führt

Die vorstehenden Wirkungen können schon bei einem geringen Gehalt der Salze in den Zusammensetzungen erreicht werden. Geeignete Zusammensetzungen, insbesondere solche für die obigen Verwendungen enthalten bevorzugt maximal 0,15 Mol Phosphor und 0,25 Mol Schwefel und besonders bevorzugt maximal 0,1 Mol Phosphor und 0,2 Mol Schwefel pro kg Zusammensetzung; vorzugsweise enthalten sie mindestens 0,01 Mol Phosphor, besonders bevorzugt mindestens 0,05 Mol Phosphor und mindestens 0,01 Mol Schwefel und besonders bevorzugt mindestens 0,05 Mol Schwefel, wobei alle Molmengen auf 1 Kilogramm (kg) Zusammensetzung, z.B. Schmierstoffe, bezogen sind.

Insbesondere können die Salze die bisher verwendeten Metallsalze, insbesondere Zinksalze wie Zinkdithiophosphate vollständig ersetzen. Die Zusammensetzungen, Schmierstoffe, Schmieröle, Hydraulikflüssigkeiten Dämpfungsflüssigkeiten und Kraftübertragungsmittel enthalten daher in einer besonders bevorzugten Ausführungsform weniger als 0, 2 Gew. %, besonders bevorzugt weniger als 0,1 Gew. %, ganz besonders bevorzugt weniger als 0,05 Gew % Zinkionen In einer ganz besonders bevorzugten Ausführungsform enthalten sie keine Zinkionen.

### Beispiele

### Herstellung

### Herstellung der Imidazolium-dithiophosphate

Ein 1,3-Dialkyl-imidazolium - methylcarbonat, gelöst in Methanol wurde vorgelegt und bei 50°C unter Rühren tropfenweise mit Dialkyldithiophosphorsäure in ca stöchiometrischem Verhältnis versetzt. Dabei kam es zur starken Gasentwicklung. Nach Zulaufende wurde die Reaktionsmischung noch für eine Stunde bei 50°C gerührt. Das Lösungsmittel wurde unter reduziertem Druck und erhöhter Temperatur entfernt und das Produkt als Reinstoff erhalten.

Als 1,3 Dialkyl-imdazolium-methylcarbonat wurden verwendet:
EMIM- methylcarbonat
   OMIM-methylcarbonat

Als Dialkyldithiophosphorsäure wurden verwendet:
Di-2-ethylhexyldithiophosphorsäure (Deophos®, D.O.G. Hamburg)
   Di-2-Propylheptyldithiophosphorsäure

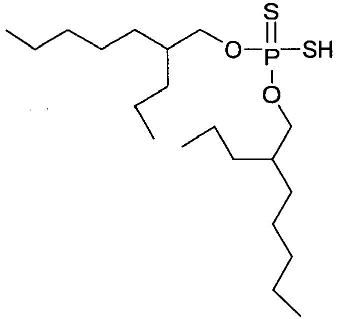

Die Umsetzung erfolgt nach folgendem Mechanismus, gezeigt am Beispiel der Di-2ethylhexyldithiophosphorsäure und des EMIM-methylcarbonats:

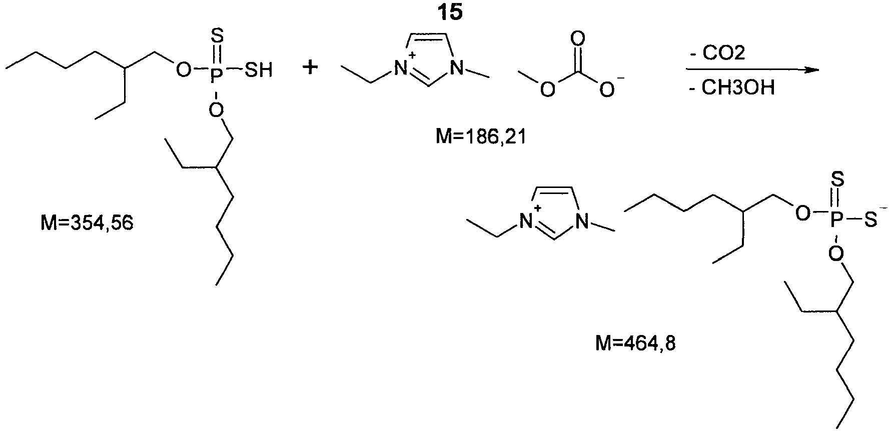

### 1. Herstellungsbeispiel

### Herstellung von EMIM- di-2-ethylhexyldithiophosphat [EMIM] [2EHDTP]

155 g EMIM-methylcarbonat-Lösung (46,6 g = 0,25 mol EMIM-methylcarbonat in Methanol) wurde vorgelegt und bei 50°C unter Rühren langsam 90,4g = 0,255 mol Deophos zugetropft. Die Reaktion springt sofort an und es entweicht CO2.
Nach Zulaufende wurde noch etwa 1 h bei 50°C nachgerührt, bis keine Gasentwicklung mehr zu sehen war.
Das Produkt wurde am Rotationsverdampfer zur Trockene eingeengt.

### Auswage 118,9 g

Die NMR-Daten und Elementaranalyse stimmten mit EMIM- di-2ethylhexyldithiophosphat überein.

### 2. Herstellungsbeispiel

### Herstellung von OMIM- di-2-ethylhexyldithiophosphat [OMIM] [2EHDTP]

162,4 g OMIM-methylcarbonat-Lösung (53,6 g = 0,2 mol OMIM in Methanol) wurde vorgelegt und bei 50°C unter Rühren langsam 70,9 g (0,2 mol) Deophos zugetropft. Dabei entweicht CO2. Nach Zulaufende wurde noch etwa 1 h bei 50°C nachgerührt, bis keine Gasentwicklung mehr zu sehen war.
Das Produkt wurde am Rotationsverdampfer zur Trockene eingeengt.

### Auswage 109,7 g gelbe, hochviskose Flüssigkeit

Die NMR-Daten und Elementaranalyse stimmten mit OMIM- di-2-ethylhexyldithiophosphat überein.

### 3. Herstellungsbeispiel

### Herstellung der Di-(2-propylheptyl)dithiophosphorsäure

0,2 mol Diphosphorpentasulfid (44 g) wurden in 300ml Toluol suspendiert und auf 75°C erwärmt. Dann wurden über den Zeitraum von 1 h 0,8 Mol 2-Propylheptanol (127 g) unter Gasentwicklung zugetropft. Die Reaktionsmischung wurde noch weitere 2 Stunden bei 75°C gerührt. Es wurde eine klare Lösung erhalten. Der Umsatz betrug >95% (bestimmt mittels Säure-Base Titration).

### Anwendungstechnische Prüfungen:

### Lasttragevermögen ( load carrying capacity)

Das Lasttragevermögen wurde analog ASTM D 5706 (Stufentest) bestimmt.

Im Schwing-Reib-Verschleiss Gerät, kurz SRV-Gerät (Optimol Instruments, München) wird die zu prüfende Zusammensetzung auf eine Scheibe gegeben und eine Kugel mit einer definierten, steigenden Last aufgedrückt, wobei die Zusammensetzung als Schmierstoff zwischen Platte und Kugel dient. Die Last wird solange stufenweise erhöht, bis ein Reibungskoeffizient von 0,25 überschritten wird.

Bedingungen: Weglänge 1 mm, Frequenz 50 Herz,Temperatur: Raumtemperatur, Kugel-Scheibe Prüfkörpergeometrie, Prüflast: Einlaufzeit: 50 N-30 sec, danach in 100N Schritten ansteigend, bis der Reibungskoeffizient >0,25 ist.

Die Messungen wird automatisch abgebrochen, sobald zu erkennen ist, dass der Reibungskoeffizient beginnt auf einen hohen Wert springt, d.h. bei beginnender Beschädigung der Scheibe bzw. Kugel aufgrund der fehlenden Wirkung der Zusammensetzung als Schmierstoff. Die bei Abbruch aufgelegt Last (in Kraft pro Fläche, N/mm²) wird Gutlast genannt; je höher die Gutlast ist, desto besser ist die Schmierwirkung.

### Oxidationsverhalten

Zur Bestimmung des Oxidationsverhaltens wurde eine DSC-Messung unter Luft durchgeführt. Die Zusammensetzung wurde in ein Glasgefäß eingefüllt und die Temperatur von 30°C auf 410°C erhöht und die durch Oxidation freiwerdende Wärmemenge (exotherme Reaktion) bestimmt. Je höher die Wärmemenge, desto intensiver ist die Oxidation. Je geringer die gemessene Wärmemenge der Oxidation, desto besser ist das Oxidationsverhalrten.

Als Schmieröl (Basisöl) wurden marktübliche Produkte verwendet, wie DITA, Palatinol 10P, Synative ES TMTC

Zum Vergleich wurde als Additiv das marktübliche Zinksalz Zink-(di-2-ethylhexyldithiophosphat)₂ (=Zn [2EHDTP]2) verwendet; aufgrund der Zweiwertigkeit des Zinks enthalten die Zinksalze zwei Dithiophosphat-Anionen.

### Lasttragevermögen

| | | Gutlast N/mm² | Additiv [Gew.-%] | Additiv |
|---|---|---|---|---|
| DITA (Diisotridecyladipat) | 100% | 1130 | | |
| DITA | 99,50% | 2000 | 0,50% | EMIM 2EHDTP |
| DITA | 98,26% | 2080 | 1,74% | OMIM 2EHDTP |
| DITA | 98,10% | 2320 | 1,90% | EMIM 2EHDTP |
| DITA | 98,92% | 1300 | 1,08% | Zn[2EHDTP)]2 |
| | | | | |
| ANDERE BASISÖLE Palatinol 10P (BASF) | 100% | 1140 | | |
| Synative ES TMTC (Cognis) | | | | |
| Trimethylolpropan-C8-C10-Ester | 100% | 1190 | | |

### Oxidationsverhalten

### (DSC)

| | | Wärmeentwicklung durch Oxidation [mJ] | Additiv [Gew.-%] | Additiv |
|---|---|---|---|---|
| DITA | 100% | 4166 | | |
| DITA | 99,50% | 2531 | 0,50% | EMIM 2EHDTP |
| DITA | 98,26% | 1208 | 1,74% | OMIM 2EHDTP |
| DITA | 98,10% | 101 | 1,90% | EMIM 2EHDTP |
| DITA | 98,92% | 1870 | 1,08% | Zn [(2EHDTP)]2 |

### Kombinierte Syteme : Synergie mit A-rylphoshaten, tertärbutyliert.

| | | Gutlast [N/mm²] | Wärmeentwicklung durch Oxidation [mJ] |
|---|---|---|---|
| DITA | 98,03% | | |
| Arylphosphat A | 1,02% | 2646 | 1204 |
| EMIM 2EHDTP | 0,95% | | |
| | | | |
| DITA | 97,98% | | |
| Arylphosphat A | 1,01% | 2504 | 249 |
| OMIM 2EHDTP | 1,01% | | |
| | | | |
| IONISCHE FLÜSSIGKEITEN | | | |
| EMIM 2EHDTP | 100% | 1108 | |
| OMIM 2EHDTP | 100% | 1400 | |

## Patentansprüche

1. Salze aus dem Anion der Di-, Tri- oder Tetrathiophosphorsäure gemäß Formel I 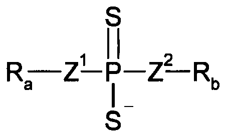 worin Z¹ und Z² unabhängig voneinander für ein Sauerstoff- oder ein Schwefel-atom stehen und Rₐ und R_{b} unabhängig voneinander für eine organische Gruppe mit 1 bis 20 C-Atomen stehen,
und einem Kation, ausgewählt aus
einem Imidazoliumkation der Formel II 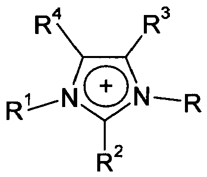 worin R und R^{I} unabhängig voneinander für eine C1- bis C12-Alkylgruppe und R² bis R⁴ unabhängig voneinander für ein Wasserstoffatom oder eine C1- bis C12-Alkylgruppe stehen,
einem Pyridiniumkation der Formel III 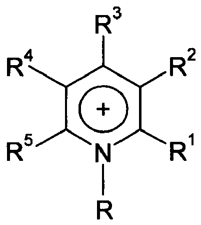 worin R für eine C1- bis C12-Alkylgruppe und R¹ bis R⁵ unabhängig voneinander für ein Wasserstoffatom oder eine C1- bis C12-Alkylgruppe stehen
einem Pyrazoliumkation der Formel IV 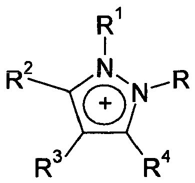 worin R und R¹ unabhängig voneinander für eine C1- bis C12-Alkylgruppe und R² bis R⁴ unabhängig voneinander für ein Wasserstoffatom oder eine C1- bis C12-Alkylgruppe stehen,
einem Imidazoliniumkation der Formel V 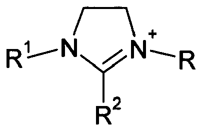 worin einer der Reste R oder R¹ für ein Wasserstoffatom und der andere Rest R oder R¹ für eine C1- bis C8 Alkylgruppe oder C1- bis C8 Hydroxyalkylgruppe und R² für eine C1- bis C20 Alkylgruppe oder eine C2 bis C20 Alkylengruppe stehen
oder einem Triazoliumkation der Formel VI 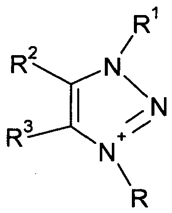 worin R und R¹ für ein Wasserstoffatom oder eine C1- bis C12-Alkylgruppe stehen und die Reste R² und R³ unabhängig voneinander für ein Wasserstoffatom oder eine Alkylgruppe mit 1 bis 12 C-Atomen stehen oder R² und R³ gemeinsam einen Benzolring ausbilden, dessen Kohlenstoffatome gegebenenfalls durch C1-bis C4 Alkylgruppen substituiert sein können.

2. Salze gemäß Anspruch 1, **dadurch gekennzeichnet, dass** es sich bei Z¹ und Z² in Formel I um ein Sauerstoffatom handelt.

3. Salze gemäß Anspruch 1 oder 2, **dadurch gekennzeichnet, dass** es sich bei Rₐ und R_{b} in Formel I unabhängig voneinander um eine C1 bis C20 Alkylgruppe handelt.

4. Salze gemäß einem der Ansprüche 1 bis 3, **dadurch gekennzeichnet, dass** die Summe der Kohlenstoffatome in den Resten Rₐ und R_{b} 12 bis 40 beträgt.

5. Salze gemäß einem der Ansprüche 1 bis 4, **dadurch gekennzeichnet, dass** einer der Reste Rₐ oder R_{b} oder beide Reste Rₐ oder R_{b} für eine 2-Propylheptyl-gruppe stehen.

6. Verfahren zur Herstellung von Salzen gemäß einem der Ansprüche 1 bis 5, **dadurch gekennzeichnet, dass** das Alkylcarbonatsalz des Kations mit der entsprechenden Di-, Tri- oder Tetrathiophosphorsäure umgesetzt wird.

7. Verwendung der Salze gemäß Ansprüchen 1 bis 5 oder von Zusammensetzungen, enthaltend ein Salz gemäß einem der Ansprüche 1 bis 7 als oder in Schmierstoffen.

8. Verwendung der Salze gemäß einem der Ansprüche 1 bis 5 oder von Zusammensetzungen, enthaltend ein Salz gemäß einem der Ansprüche 1 bis 7 als oder in Hydraulik-Flüssigkeiten, Dämpfungsflüssigkeiten oder Kraftübertragungsmitteln.

9. Schmierstoffe, enthaltend ein Salz gemäß einem der Ansprüche 1 bis 5.

10. Schmierstoffe, enthaltend 0,1 bis 20 Gew. % der Salze gemäß einem der Ansprüche 1 bis 6.

11. Schmierstoffe gemäß Anspruch 9 oder 10, **dadurch gekennzeichnet, dass** es sich um bei Raumtemperatur flüssige Schmierstoffe (Schmieröle) handelt, welche zu mehr als 50 Gew. % aus mindestens einem tierischen ÖL, pflanzlichen Öle, Mineralöle oder synthetischen Öl oder deren Gemische bestehen.

12. Hydraulik-Flüssigkeiten, Dämpfungsflüssigkeiten oder Kraftübertragungsmittel, enthaltend ein Salz gemäß einem der Ansprüche 1 bis 5.

13. Zusammensetzungen, welche ein Salz gemäß einem der Ansprüche 1 bis 5 enthalten und insgesamt zu mindestens 20 Gew. % aus ionischen Flüssigkeiten bestehen.

14. Zusammensetzungen, welche ein Salz gemäß einem der Ansprüche 1 bis 5 enthalten und insgesamt zu mindestens 50 Gew: % aus ionischen Flüssigkeiten bestehen.

15. Verwendung von Zusammensetzungen gemäß Anspruch 13 oder 14 als Schmiermittel, Hydraulik-Flüssigkeit, Dämpfungsflüssigkeit oder Kraftübertragungsmittel.

## Claims

1. A salt of the anion of di-, tri- or tetrathiophosphoric acid of the formula I 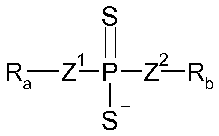 in which Z¹ and 2² are each independently an oxygen or sulfur atom, and Rₐ and R_{b} are each independently an organic group having 1 to 20 carbon atoms,
and a cation selected from
an imidazolium cation of the formula II 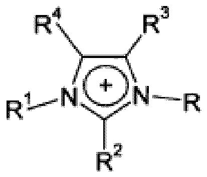 in which R and R¹ are each independently a C1 to C12 alkyl group and R² to R⁴ are each independently a hydrogen atom or a C1 to C12 alkyl group,
a pyridinium cation of the formula III 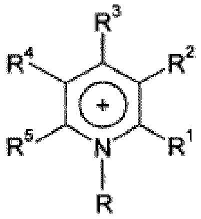 in which R is a C1 to C12 alkyl group and R¹ to R⁵ are each independently a hydrogen atom or a C1 to C12 alkyl group,
a pyrazolium cation of the formula IV 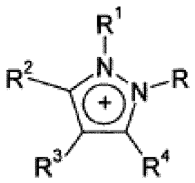 in which R and R¹ are each independently a C1 to C12 alkyl group and R² to R⁴ are each independently a hydrogen atom or a C1 to C12 alkyl group,
an imidazolinium cation of the formula V 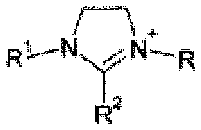 in which one of the radicals R or R¹ is a hydrogen atom and the other radical R or R¹ is a C1 to C8 alkyl group or C1 to C8 hydroxyalkyl group, and R² is a C1 to C20 alkyl group or a C2 to C20 alkylene group,
or a triazolium cation of the formula VI 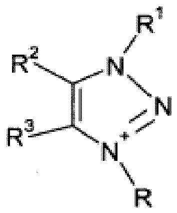 in which R and R¹ are each a hydrogen atom or a C1 to C12 alkyl group, and the radicals R² and R³ are each independently a hydrogen atom or an alkyl group having 1 to 12 C atoms, or R² and R³ together form a benzene ring, whose carbon atoms may optionally be substituted by C1 to C4 alkyl groups.

2. A salt according to claim 1, wherein Z¹ and Z² in formula I are each an oxygen atom.

3. A salt according to claim 1 or 2, wherein Rₐ and R_{b} in formula I are each independently a C1 to C20 alkyl group.

4. A salt according to any of claims 1 to 3, wherein the sum of the carbon atoms in the Rₐ and R_{b} radicals is 12 to 40.

5. A salt according to any of claims 1 to 4, wherein one of the Rₐ and R_{b} radicals is, or both Rₐ and R_{b} radicals are, a 2-propylheptyl group.

6. A process for preparing salts according to any of claims 1 to 5, which comprises reacting the alkylcarbonate salt of the cation with the appropriate di-, tri- or tetrathiophosphoric acid.

7. The use of the salts according to claims 1 to 5 or of compositions comprising a salt according to any of claims 1 to 7 as or in lubricants.

8. The use of the salts according to any of claims 1 to 5 or of compositions comprising a salt according to any of claims 1 to 7 as or in hydraulic fluids, damping fluids or force transmission media.

9. A lubricant comprising a salt according to any of claims 1 to 5.

10. A lubricant comprising 0.1 to 20% by weight of the salts according to any of claims 1 to 6.

11. The lubricant according to claim 9 or 10, which is a room-temperature liquid lubricant (lubricant oil) which consists to an extent of more than 50% by weight of at least one animal oil, vegetable oils, mineral oils or synthetic oil or mixtures thereof.

12. A hydraulic fluid, damping fluid or force transmission medium comprising a salt according to any of claims 1 to 5.

13. A composition which comprises a salt according to any of claims 1 to 5 and consists of ionic liquids to a total extent of at least 20% by weight.

14. A composition which comprises a salt according to any of claims 1 to 5 and consists of ionic liquids to a total extent of at least 50% by weight.

15. The use of compositions according to claim 13 or 14 as a lubricant, hydraulic fluid, damping fluid or force transmission medium.

## Revendications

1. Sels de l'anion de l'acide dithiophosphorique, trithiophosphorique ou tétrathiophosphorique selon la formule I 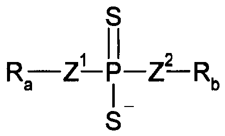 dans laquelle Z¹ et Z² représentent, indépendamment l'un de l'autre, un atome d'oxygène ou un atome de soufre et Rₐ et R_{b} représentent, indépendamment l'un de l'autre, un groupe organique comprenant 1 à 20 atomes de carbone, et d'un cation, choisi parmi
un cation imidazolium de formule II 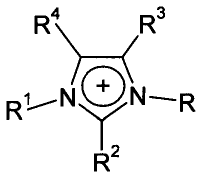 dans laquelle R et R¹ représentent, indépendamment l'un de l'autre, un groupe C₁-C₁₂-alkyle et R² à R⁴ représentent, indépendamment les uns des autres, un atome d'hydrogène ou un groupe C₁-C₁₂-alkyle,
un cation pyridinium de formule III 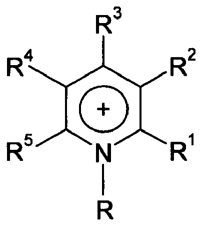 dans laquelle R représente un groupe C₁-C₁₂-alkyle et R¹ à R⁵ représentent, indépendamment les uns des autres, un atome d'hydrogène ou un groupe C₁-C₁₂-alkyle,
un cation pyrazolium de formule IV 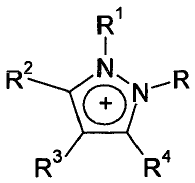 dans laquelle R et R¹ représentent, indépendamment l'un de l'autre, un groupe C₁-C₁₂-alkyle et R² à R⁴ représentent, indépendamment les uns des autres, un atome d'hydrogène ou un groupe C₁-C₁₂-alkyle,
un cation imidazolinium de formule V 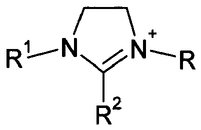 dans laquelle un des radicaux R ou R¹ représente un atome d'hydrogène et l'autre radical R ou R¹ représente un groupe C₁-C₈-alkyle ou un groupe C₁-C₈-hydroxyalkyle et R² représente un groupe C₁-C₂₀-alkyle ou un groupe C₂-C₂₀-alkylène ou
un cation triazolium de formule VI 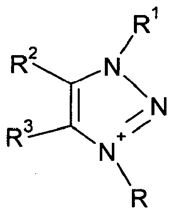 dans laquelle R et R¹ représentent un atome d'hydrogène ou un groupe C₁-C₁₂-alkyle et les radicaux R² et R³ représentent, indépendamment l'un de l'autre, un atome d'hydrogène ou un groupe alkyle comprenant 1 à 12 atomes de carbone ou R² et R³ forment ensemble un cycle benzène, dont les atomes de carbone peuvent le cas échéant être substitués par des groupes C₁-C₄-alkyle.

2. Sels selon la revendication 1, **caractérisés en ce qu'**il s'agit, pour Z¹ et Z² dans la formule I, d'un atome d'oxygène.

3. Sels selon la revendication 1 ou 2, **caractérisés en ce qu'**il s'agit, pour Rₐ et R_{b} dans la formule I, indépendamment l'un de l'autre, d'un groupe C₁-C₂₀-alkyle.

4. Sels selon l'une quelconque des revendications 1 à 3, **caractérisés en ce que** la somme des atomes de carbone dans les radicaux Rₐ et R_{b} vaut 12 à 40.

5. Sels selon l'une quelconque des revendications 1 à 4, **caractérisés en ce qu'**un des radicaux Rₐ ou R_{b} ou les deux radicaux Rₐ ou R_{b} représentent un groupe 2-propylheptyle.

6. Procédé pour la préparation de sels selon l'une quelconque des revendications 1 à 5, **caractérisé en ce qu'**on transforme le sel d'alkylcarbonate du cation avec l'acide dithiophosphorique, trithiophosphorique ou tétrathiophosphorique correspondant.

7. Utilisation des sels selon les revendications 1 à 5 ou de compositions, contenant un sel selon l'une quelconque des revendications 1 à 7 comme ou dans des lubrifiants.

8. Utilisation des sels selon l'une quelconque des revendications 1 à 5 ou de compositions, contenant un sel selon l'une quelconque des revendications 1 à 7 comme ou dans des liquides hydrauliques, des liquides de suspension ou des agents de transmission de force.

9. Lubrifiants, contenant un sel selon l'une quelconque des revendications 1 à 5.

10. Lubrifiants, contenant 0,1 à 20% en poids des sels selon l'une quelconque des revendications 1 à 6.

11. Lubrifiants selon la revendication 9 ou 10, **caractérisés en ce qu'**il s'agit de lubrifiants liquides à température ambiante (huiles lubrifiantes) qui sont constitués à raison de plus de 50% en poids d' au moins une huile animale, d'huiles végétales, d'huiles minérales ou d'huile synthétique ou leurs mélanges.

12. Liquides hydrauliques, liquides de suspension ou agents de transmission de force contenant un sel selon l'une quelconque des revendications 1 à 5.

13. Compositions qui contiennent un sel selon l'une quelconque des revendications 1 à 5 et qui sont constituées, au total, à raison d'au moins 20% en poids de liquides ioniques.

14. Compositions qui contiennent un sel selon l'une quelconque des revendications 1 à 5 et qui sont constituées, au total, à raison d'au moins 50% en poids de liquides ioniques.

15. Utilisation de compositions selon la revendication 13 à 14 comme lubrifiant, liquide hydraulique, liquide de suspension ou agent de transmission de force.
